# EUROPÄISCHE PATENTSCHRIFT

(11) **EP 2 086 662 B1**
(45) Veröffentlichungstag und Bekanntmachung des Hinweises auf die Patenterteilung: **06.04.2011**
(21) Anmeldenummer: 07803259.6
(22) Anmeldetag: 05.09.2007
(51) Int. Cl.: B01D 46/02, B01D 46/00

(54) **FILTEREINRICHTUNG**
FILTERING DEVICE
DISPOSITIF DE FILTRAGE

(30) Priorität: 12.10.2006 DE 202006015784 U
(43) Veröffentlichungstag der Anmeldung: 12.08.2009
(73) Patentinhaber: MANN+HUMMEL GmbH, 71638 Ludwigsburg (DE)
(72) Erfinder: JESSBERGER, Thomas, 71679 Asperg (DE); HANSELMANN, Markus, 74348 Lauffen A. N. (DE); SCHOLL, Hans-Peter, 74395 Mundelsheim (DE); WALTENBERG, Klaus, 71723 Grossbottwar (DE); WALZ, Stefan, 71691 Freiberg a. N. (DE); EISENGRÄBER-PABST, Jobst, 71726 Benningen A. N. (DE); PELZ, Andreas, 70806 Kornwestheim (DE); LAMPERT, Johannes, 71686 Remseck (DE); THIENEL, Michael, 95359 Kasendorf (DE); KNODEL, Daniela, 74372 Sersheim (DE); STREICH, Joachim, 71679 Asperg (DE); BAUER, Sascha, 71549 Auenwald (DE)
(86) Internationale Anmeldenummer: PCT/EP2007/059297
(87) Internationale Veröffentlichungsnummer: WO 2008/043611

(56) Entgegenhaltungen:
- WO-A-2007/096280
- DE-A1- 4 404 290
- DE-A1- 10 052 166
- GB-A- 456 468
- US-A- 5 672 273

## Beschreibung

### Technisches Gebiet

Die Erfindung bezieht sich auf eine Filtereinrichtung, insbesondere zur Filtration von Verbrennungsluft in Brennkraftmaschinen, nach dem Oberbegriff des Anspruches 1.

### Stand der Technik

Bekannt ist aus der EP 0 450 299 A1 eine Filtereinrichtung zur Filtration der Verbrennungsluft in Brennkraftmaschinen mit einem plattenförmig angeordneten, zickzackförmig gefalteten Filterelement in einem Filtergehäuse. Die Filtereinrichtung ist im Ansaugtrakt der Brennkraftmaschine angeordnet, wobei die zu reinigende Verbrennungsluft über Rohrleitungen der Rohseite des Filterelementes zugeführt, beim Passieren des Filterelementes gereinigt und anschließend über die Reinseite des Filterelementes und weitere Rohrstücke abgeleitet und den Zylindereingängen der Brennkraftmaschine zugeführt wird.

Ferner sind beispielsweise aus US 5 672 273 A, GB 456 468 A, DE 100 52 166 A1, DE 44 04 290 A1 und WO 2007/096280 A verschiedene schlauchförmige, in Rohrleitungen angeordnete Filterelemente bekannt.

Die Filtration der Verbrennungsluft ist für eine ordnungsgemäße Funktionstüchtigkeit der Brennkraftmaschine sowie der Nebenaggregate der Brennkraftmaschine wie z.B. einem Verdichter von erheblicher Bedeutung. Fehlluftströme, die das Filterelement umgehen, müssen daher ausgeschlossen sein. Dies erfordert einerseits einen sicheren und festen Sitz des Filterelementes im Strömungsweg der Verbrennungsluft, andererseits muss das Filterelement für regelmäßige Wartungsarbeiten leicht auszutauschen sein.

### Offenbarung der Erfindung

Der Erfindung liegt die Aufgabe zugrunde, mit einfachen konstruktiven Maßnahmen eine Filtereinrichtung zu schaffen, bei der Fehlluftströme zur Umgehung des Filterelementes sicher vermieden werden und die sich zugleich durch eine leichte Austauschbarkeit des Filterelementes auszeichnet.

Diese Aufgabe wird erfindungsgemäß mit den Merkmalen des Anspruches 1 gelöst. Die Unteransprüche geben zweckmäßige Weiterbildungen an.

Die erfindungsgemäße Filtereinrichtung eignet sich insbesondere zur Filtration von Verbrennungsluft in Brennkraftmaschinen, darüber hinaus aber in allgemeiner Weise zur Filtration von gasförmigen und ggf. auch flüssigen Fluiden. Das Filterelement der Filtereinrichtung ist schlauchförmig ausgebildet und besteht beispielsweise aus einem weichen, nachgiebigen, vliesartigen Filtermaterial, das üblicherweise aus synthetischen Grundstoffen besteht, beispielsweise auf Polymerbasis, oder auch aus natürlichen Werkstoffen, insbesondere auf Zellulosebasis. Alternativ zu einem weichen Material kommt auch ein steifes Material bzw. eine steife Ausführung in Betracht, bei der ein Paketieren der Falten ausgeschlossen ist. Dieses schlauchförmige Filterelement ist an einem Trägerteil gehalten, wobei das Trägerteil zwischen ein Rohfluidrohr und ein Reinfluidrohr einsetzbar ist, die zu einem durchgehenden Strömungsrohr zusammenzusetzen sind. Im montierten Zustand befindet sich das schlauchförmige Filterelement im Inneren des Strömungsrohres, wobei das Trägerteil eine Trägerhülse aufweist, die die axialen Stirnseiten von Roh- und Reinfluidrohr radial umgreift, wobei das Trägerteil mit den Fluidrohren über eine Rastverbindung verbunden ist.

Diese Ausführung weist gegenüber dem Stand der Technik verschiedene Vorteile auf. Zum einen kann das Filterelement leicht ausgetauscht werden, da das Filterelement mit dem Trägerteil ein austauschbares Modul bildet, das beispielsweise für Wartungszwecke aus dem Rohrverbund entnommen und nach der Wartung bzw. dem Austausch des Filterelementes wieder eingesetzt werden kann. Außerdem ist die Gefahr von Fehlluftströmen gebannt, da das Trägerteil einen fest vorgegebenen, dichtenden Sitz zwischen den Fluidrohren einnimmt und andererseits das Filterelement fest mit dem Trägerteil verbunden ist. Ein nicht ordnungsgemäßer Sitz des Trägerteils zwischen den Fluidrohren, beispielsweise verursacht durch Schwingungen oder nicht sachgerechte Montage, ist damit praktisch ausgeschlossen. Gleiches gilt für Fehlströmungen, welche das Filterelement umgehen könnten, da die Befestigung des Filterelementes am Trägerteil außerhalb des Einbauortes durchgeführt werden kann, so dass keine montagebedingten Fehler beim Einbau des Filterelementes auftreten können.

Das Trägerteil ist zweckmäßig hülsenförmig ausgebildet und umfasst eine Trägerhülse sowie einen radial nach innen versetzten Befestigungsabsatz, an dem ein stirnseitiger Abschnitt des schlauchförmigen Filterelementes gehalten ist. Der Befestigungsabsatz ist ringförmig ausgebildet und liegt in der Einbaulage zwischen den axialen Stirnseiten von Roh- und Reinfluidrohr; dabei werden in zweckmäßiger Ausführung die Innendurchmesser des Befestigungsabsatzes und der Roh-/Reinfluidrohre gleich gehalten. Die den Befestigungsabsatz radial umgreifende Trägerhülse des Trägerteils umgreift zweckmäßig auch die stirnseitigen Abschnitte der Fluidrohre radial in der Weise, dass ein strömungsdichter Sitz des Trägerteils gegeben ist. Das Trägerteil bildet in dieser Ausführung ein Zwischenrohrstück zur Verbindung der einander zugewandten Stirnseiten der Fluidrohre.

Das Filterelement ist vorteilhaft an einer axialen Seite des Befestigungsabsatzes gehalten und in Einbaulage zwischen dieser axialen Seite und der Stirnseiten eines Fluidrohres eingeklemmt. Hierbei kann es zweckmäßig sein, dass das Filterelement fest, insbesondere unlösbar mit dem Trägerteil verbunden ist, beispielsweise mittels Verklebens. Andererseits ist es auch möglich, das Filterelement lösbar am Trägerteil zu befestigen. Die Befestigung des Filterelements am Trägerteil stellt den modularen Aufbau von Trägerteil und Filterelement als zusammengehörender Einheit sicher.

Zweckmäßig ist der stirnseitige Abschnitt des Filterelementes zwischen der Stirnseite des Rohfluidrohres und dem Befestigungsabsatz am Trägerteil eingeklemmt. Das schlauchförmige Filterelement erstreckt sich von der Einbaulage ausgehend im Inneren des Strömungsrohres bis in das Reinfluidrohr hinein. Zwischen dem Trägerteil, insbesondere der Trägerhülse und der Wandung des Reinfluidrohres kann ein zusätzlicher Dichtring positioniert sein, um Fehlluftströme sicher auszuschließen.

Gemäß zweckmäßiger weiterer Ausbildung ist das Trägerteil in Einbauposition lösbar mit den Fluidrohren verbunden, beispielweise über eine Rast- oder Schnappverbindung, um bei Bedarf den Verbund öffnen und das Modul, bestehend aus Trägerteil und Filterelement, leicht austauschen zu können. Diese Rastverbindung besteht insbesondere zwischen der radial umgreifenden Trägerhülse und einem korrespondierenden Rastteil am Außenmantel jedes Fluidrohres.

Gemäß noch einer weiteren vorteilhaften Ausführung kann die Filterwand des schlauchförmigen Filterelementes eine zusätzliche Befestigungsstelle zu einem Bauteil aufweisen, bei dem es sich insbesondere ebenfalls um das Trägerteil handelt. In dieser Ausführung ist nicht nur eine axiale Stirnseite des Filterelementes ringförmig und strömungsdicht am Trägerteil gehalten, sondern wenigstens eine Stelle des Filterelementes an einer zusätzlichen Befestigungsstelle am Trägerteil angebunden. Im Ergebnis führt dies zu einer Form des Filterschlauches mit zwei sich etwa parallel und in Strömungsrichtung erstreckenden Aussackungen. Der Vorteil dieser Ausführung liegt in der deutlich verringerten axialen Länge des Filterelementes, die sich etwa auf die Hälfte reduziert, bei zugleich etwa gleichbleibender Filterfläche. Der benötigte Bauraum in Achsrichtung ist dadurch deutlich verkleinert. Außerdem kann eine bessere Durchströmung des Filterelements realisiert werden.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:

Fig. 1 im Längsschnitt ein schlauchförmiges Filterelement, das an einem hülsen- bzw. rohrförmigen Trägerteil gehalten ist und axial von einem zu reinigenden Fluid durchströmt wird,

Fig. 2 eine Filtereinrichtung im Längsschnitt, bestehend aus zwei Fluidrohren, zwischen denen das Trägerteil und das schlauchförmige Filterelement nach Fig. 1 eingesetzt sind,

Fig. 3 in schematischer Darstellung einen Schnitt durch ein Trägerteil und ein schlauchförmiges Filterelement in alternativer Ausführung, mit Anbindung an die Roh- und Reinfluidrohre.

In den Figuren sind gleiche Bauteile mit gleichen Bezugszeichen versehen.

### Ausführungsformen der Erfindung

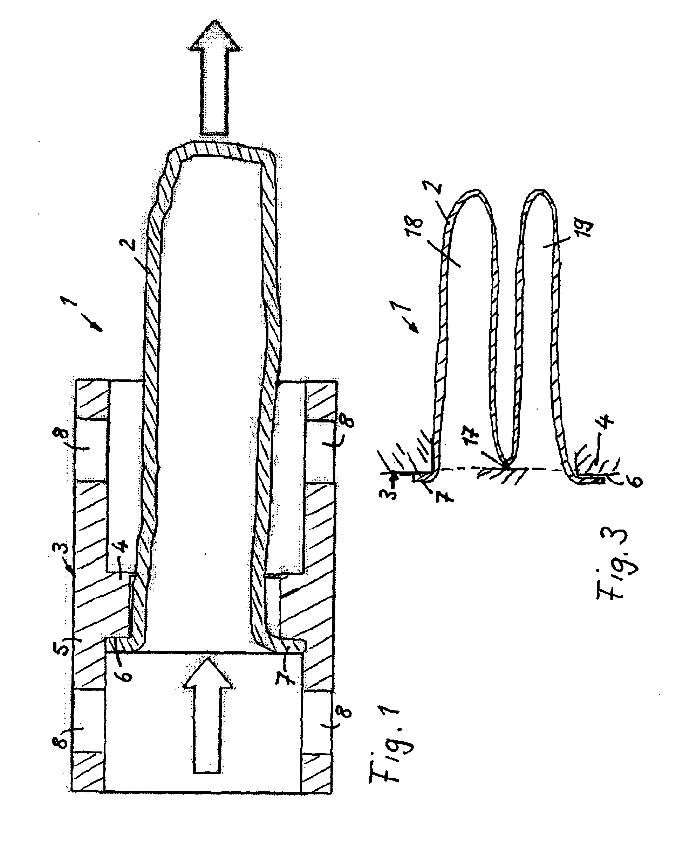

In Fig. 1 ist ein Filtermodul 1 dargestellt, bestehend aus einem schlauchförmigen Filterelement 2 aus weichem, nachgiebigen Material und einem Trägerteil 3, welches hülsen- bzw. rohrförmig ausgebildet ist und an dem das Filterelement 2 sicher und ggf. auch lösbar gehalten ist. Filterelement 2 und Trägerteil 3 bilden eine zusammengehörende Einheit, die außerhalb ihres Einsatzortes vorgefertigt wird und als gemeinsames Modul 1 verbaut wird. Das Filtermodul 1 wird insbesondere zur Filtration von Verbrennungsluft in Brennkraftmaschinen eingesetzt. Die Durchströmrichtung des zu reinigenden Fluids erfolgt in Achsrichtung wie mit den eingetragenen Pfeilen dargestellt. Die Durchströmungsrichtung kann aber auch in Gegenrichtung erfolgen, also entgegengesetzt zu den eingetragenen Pfeilen orientiert sein, so dass die Wandung des schlauchförmigen Filterelements von außen nach innen durchströmt wird.

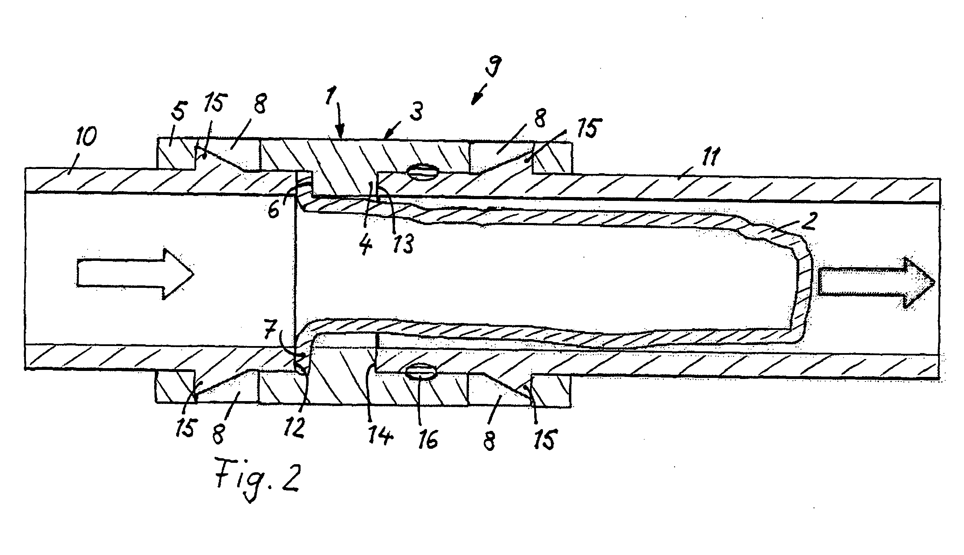

Das Trägerteil 3 besteht aus einem radial innenliegenden, ringförmigen Befestigungsabsatz 4, an dessen einer Stirnseite 6 der stirnseitige Abschnitt des Filterelementes 2 gehalten ist, sowie aus einer radial umgreifenden, axial erheblich längeren Trägerhülse 5, wobei Trägerhülse 5 und Befestigungsabsatz 4 ein einstückiges Bauteil bilden, ggf. aber auch zweistückig ausgebildet sein können. Benachbart zu den axialen Stirnseiten der Trägerhülse 5 sind in die Wandung der Trägerhülse 5 mehrere Rastausnehmungen 8 eingebracht, die vorteilhaft über den Umfang verteilt angeordnet sind. Die Rastausnehmungen 8 dienen dazu, das Trägerteil 3 zwischen den in Fig. 2 dargestellten Fluidrohren fest, jedoch lösbar zu verankern.

In Fig. 2 ist eine Filtereinrichtung 9 dargestellt, bestehend aus einem zweiteiligen Strömungsrohr mit einem Rohfluidrohr 10 und einem Reinfluidrohr 11, wobei die Rohre 10 und 11 koaxial angeordnet sind, sowie mit dem Filtermodul 1 als Verbindungsglied zwischen den Rohren 10 und 11. Das Filtermodul 1 mit dem Filterelement 2 und dem Trägerteil 3 bildet eine austauschbare und leicht zu montierende Einheit, die zwischen die stirnseitigen Enden der Fluidrohre 10 und 11 positioniert wird.

In der Einbaulage gemäß Fig. 2 ist der stirnseitige Abschnitt 7 des Filterelementes 2 zwischen der Stirnseite 6 des Befestigungsabsatzes 4 und der zugewandten Stirnseite 12 des Rohfluidrohres 10 fest und strömungsdicht eingeklemmt. Die gegenüberliegende Stirnseite 13 des Befestigungsabsatzes 4 liegt unmittelbar an der Stirnseite 14 des Reinfluidrohres 12 an. Somit bildet der ringförmige Befestigungsabsatz 4 über seine axiale Länge gesehen ein zwischenliegendes Rohrstück zwischen den einander zugewandten Stirnseiten 12 und 14 der Rohre 10 bzw. 11.

Die Trägerhülse 5 des Trägerteils 3 umgreift die axial stirnseitigen Endabschnitte jedes Rohres 10 bzw. 11. An der Außenwandung der Rohre 10 bzw. 11 sind Rastnasen 15 ausgebildet, die in die korrespondierenden Rastausnehmungen 8 in der Trägerhülse 5 rastend einragen, so dass die Rohre mit dem Trägerteil in Achsrichtung verrastet sind. Die Rastausnehmungen 8 und die Rastnasen 15 bilden gemeinsam Rastmittel, über die eine lösbare Rast- bzw. Schnappverbindung zwischen dem Rohfluidrohr 10 bzw. dem Reinfluidrohr 11 und dem Trägerteil 3 hergestellt werden kann.

Für eine strömungsdichte Verbindung und zur Vermeidung von Fehlluftströmen ist ein Dichtring 16 zwischen dem Außenmantel des Reinfluidrohres 11 und dem Innenmantel der Trägerhülse 5 am Trägerteil 3 angeordnet.

In Fig. 3 ist ein weiteres Ausführungsbeispiel eines Filtermodules 1 dargestellt, welches zwischen zwei Fluidrohre eingesetzt werden kann. Das Filterelement 2 ist wie beim ersten Ausführungsbeispiel schlauchförmig ausgebildet, wobei der stirnseitige, offene Abschnitt 7 des Filterelementes fest mit der Stirnseite 6 am Befestigungsabsatz 4 des Trägerteiles 3 gehalten ist. Im Unterschied zum vorhergehenden Ausführungsbeispiel weist das schlauchförmige Filterelement 2, welches aus dem weichen und nachgiebigen Filtermaterial besteht, eine zusätzliche Befestigungsstelle 17 zum Trägerteil 3 auf, wobei diese zusätzliche Befestigungsstelle 17 axial in gleicher Höhe wie die Stirnseite 6 am Trägerteil angeordnet ist. An der Befestigungsstelle 17 wird ein in entfaltetem Zustand an der geschlossenen Stirnseite des Filterschlauches liegender Punkt des Schlauches befestigt, was zur Folge hat, dass im Filterschlauch zwei Aussackungen 18 und 19 gegeben sind, die etwa parallel zueinander liegen und sich in Achs- bzw. Strömungsrichtung erstrecken und jeweils einen Filtersack bilden. Auf diese Weise kann die axiale Länge des Filterelementes 2 etwa auf die Hälfte reduziert werden.

Die Filtereinrichtung eignet sich insbesondere für die Filtration von Verbrennungsluft in Brennkraftmaschinen. Es ist aber auch eine Anwendung für die Filtration der Fahrzeuginnenraumluft oder allgemein für die Filtration in Fahrzeugen möglich.

## Patentansprüche

1. Verbrennungsluftfiltereinrichtung, insbesondere zur Filtration von Verbrennungsluft in Brennkraftmaschinen, umfassend ein in einem Filtergehäuse angeordnetes Filterelement (2), ein Trägerteil (3), ein Rohfluidrohr (10) und ein Reinfluidrohr (11), wobei das Filterelement (2) schlauchförmig ausgebildet ist, wobei die Wandung des Filterelements (2) die Rohseite und die Reinseite radial separiert, wobei das schlauchförmige Filterelement (2) an einem Trägerteil (3) gehalten ist und wobei das Trägerteil (3) zwischen ein Rohfluidrohr (10) und ein Reinfluidrohr (11) einsetzbar ist, die zu einem durchgehenden Strömungsrohr zusammenzusetzen sind, wobei das Filterelement (2) sich im Inneren des Strömungsrohres befindet, **dadurch gekennzeichnet, dass** das Trägerteil (3) eine Trägerhülse (5) aufweist, die die axialen Stirnseiten (12 bzw. 14) von Roh- und Reinfluidrohr (10 bzw. 11) radial umgreift, wobei das Trägerteil (3) mit den Fluidrohren (10, 11) über eine Rastverbindung verbunden ist.

2. Verbrennungsluftfiltereinrichtung nach Anspruch 1, **dadurch gekennzeichnet, dass** das Trägerteil (3) einen radial nach innen versetzten Befestigungsabsatz (4) aufweist, der zwischen den Stirnseiten (12 bzw. 14) von Roh- und Reinfluidrohr (10 bzw- 11) positioniert ist.

3. Verbrennungsluftfiltereinrichtung nach Anspruch 2, **dadurch gekennzeichnet, dass** am Befestigungsabsatz (4) ein stirnseitiger Abschnitt (7) des schlauchförmigen Filterelements (2) gehalten ist.

4. Verbrennungsluftfiltereinrichtung nach einem der Ansprüche 1 bis 3, **dadurch gekennzeichnet, dass** der Befestigungsabsatz (4) an der radialen Innenseite der Trägerhülse (5) angeordnet ist.

5. Verbrennungsluftfiltereinrichtung nach einem der Ansprüche 1 bis 4, **dadurch gekennzeichnet, dass** der stirnseitige Abschnitt (7) des schlauchförmigen Filterelements (2) an der Stirnseite (12 bzw. 14) eines Fluidrohres (10 bzw. 11) anliegt.

6. Verbrennungsluftfiltereinrichtung nach Anspruch 5, **dadurch gekennzeichnet, dass** der stirnseitige Abschnitt (7) des schlauchförmigen Filterelements (2) zwischen der Stirnseite (12 bzw. 14) eines Fluidrohres (10 bzw. 11) und dem Trägerteil (3) eingeklemmt ist.

7. Verbrennungsluftfiltereinrichtung nach einem der Ansprüche 1 bis 6, **dadurch gekennzeichnet, dass** das Trägerteil (3) lösbar mit den Fluidrohren (10, 11) verbunden ist.

8. Verbrennungsluftfiltereinrichtung nach einem der Ansprüche 1 bis 7, **dadurch gekennzeichnet, dass** die Filterwand des schlauchförmigen Filterelements (2) über eine zusätzliche Befestigungsstelle (17) mit einem Bauteil verbunden ist.

9. Verbrennungsluftfiltereinrichtung nach Anspruch 8, **dadurch gekennzeichnet, dass** die zusätzliche Befestigungsstelle (17) sich am Trägerteil (3) befindet, so dass im Filterelement (2) zwei sich in Strömungsrichtung erstreckende, parallele Aussackungen (18, 19) gegeben sind.

10. Verbrennungsluftfiltereinrichtung nach einem der Ansprüche 1 bis 9, **dadurch gekennzeichnet, dass** zwischen Trägerteil (3) und mindestens einem der Fluidrohre (10, 11) ein Dichtring (16) angeordnet ist.

## Claims

1. Combustion-air filter device, in particular for filtering combustion air in internal combustion engines, comprising a filter element (2) disposed in a filter housing, a support structure (3), an unfiltered fluid tube (10) and a filtered fluid tube (11), the filter element (2) being tube-shaped, the wall of the filter element (2) separating the unfiltered fluid side and the filtered fluid side radially, the tube-shaped filter element (2) being supported by a support structure (3), and the support structure (3) being insertable between an unfiltered fluid tube (10) and a filtered fluid tube (11) which are to be assembled to form an end-to-end flow tube, the filter element (2) being in the interior of the flow tube, **characterized in that** the support structure (3) features a support sleeve (5) that encompasses radially the axial front sides (12 or 14 resp.) of the unfiltered fluid tube and the filtered fluid tube (10 or 11 resp.), the support structure (3) being connected with the fluid tubes (10, 11) via a snap-in connection.

2. Combustion-air filter device according to claim 1, **characterized in that** the support structure (3) features a radially inward offset attachment shoulder (4) which is positioned between the front sides (12 or 14 resp.) of the unfiltered fluid tube and the filtered fluid tube (10 or 11 resp.).

3. Combustion-air filter device according to claim 2, **characterized in that** a frontal section (7) of the tube-shaped filter element (2) is held at the attachment shoulder (4).

4. Combustion-air filter device according to one of the claims 1 to 3, **characterized in that** the attachment shoulder (4) is disposed at the radial interior side of the support sleeve (5).

5. Combustion-air filter device according to one of the claims 1 to 4, **characterized in that** the frontal section (7) of the tube-shaped filter element (2) abuts the front side (12 or 14 resp.) of one fluid tube (10 or 11 resp.).

6. Combustion-air filter device according to claim 5, **characterized in that** the frontal section (7) of the tube-shaped filter element (2) is clamped between the front side (12 or 14 resp.) of one fluid tube (10 or 11 resp.) and the support structure (3).

7. Combustion-air filter device according to one of the claims 1 to 6, **characterized in that** the support structure (3) is detachably connected with the fluid tubes (10, 11).

8. Combustion-air filter device according to one of the claims 1 to 7, **characterized in that** the filter wall of the tube-shaped filter element (2) is connected via an additional fixing point (17) with a component.

9. Combustion-air filter device according to claim 8, **characterized in that** the additional fixing point (17) is situated at the support structure (3) so that in the filter element (2) two in flow direction parallel running protrusions (18, 19) are formed.

10. Combustion-air filter device according to one of the claims 1 to 9, **characterized in that** between the support structure (3) and at least one of the fluid tubes (10, 11), a sealing flange (16) is disposed.

## Revendications

1. Dispositif de filtration d'air de combustion, notamment pour la filtration d'air de combustion dans des moteurs à combustion interne, comprenant un élément filtrant (2) disposé dans un boîtier de filtre, une pièce de support (3), un tube de fluide non-filtré (10) et un tube de fluide filtré (11), l'élément filtrant (2) étant réalisé en forme de tuyau, la paroi de l'élément filtrant (2) séparant le côté non filtré du côté filtré en sens radial, l'élément filtrant (2) en forme de tuyau étant fixé sur une pièce de support (3) et la pièce de support (3) pouvant être insérée entre un tube de fluide non-filtré (10) et un tube de fluide filtré (11), ces tubes pouvant être assemblés pour former un tube d'écoulement continu, l'élément filtrant (2) se trouvant à l'intérieur du tube d'écoulement, **caractérisé en ce que** la pièce de support (3) présente une douille de support (5) qui enveloppe en sens radial les faces frontales (12 resp. 14) axiales du tube de fluide non-filtré et du tube de fluide filtré (10 resp. 11), la pièce de support (3) étant reliée aux tubes de fluide (10, 11) par une liaison par encliquetage.

2. Dispositif de filtration d'air de combustion selon la revendication 1, **caractérisé en ce que** la pièce de support (3) présente un épaulement de fixation (4) décalé vers l'intérieur en sens radial qui est positionné entre les faces frontales (12 resp. 14) du tube de fluide non-filtré et du tube de fluide filtré (10 resp. 11).

3. Dispositif de filtration d'air de combustion selon la revendication 2, **caractérisé en ce qu'**une section frontale (7) de l'élément filtrant (2) en forme de tuyau est fixée sur l'épaulement de fixation (4).

4. Dispositif de filtration d'air de combustion selon l'une des revendications 1 à 3, **caractérisé en ce que** l'épaulement de fixation (4) est disposé sur la face intérieure radiale de la douille de support (5).

5. Dispositif de filtration d'air de combustion selon l'une des revendications 1 à 4, **caractérisé en ce que** la section frontale (7) de l'élément filtrant (2) en forme de tuyau est appliquée sur la face frontale (12 resp. 14) d'un tube de fluide (10 resp. 11).

6. Dispositif de filtration d'air de combustion selon la revendication 5, **caractérisé en ce que** la section frontale (7) de l'élément filtrant (2) en forme de tuyau est coincée entre la face frontale (12 resp. 14) d'un tube de fluide (10 resp. 11) et la pièce de support (3).

7. Dispositif de filtration d'air de combustion selon l'une des revendications 1 à 6, **caractérisé en ce que** la pièce de support (3) est reliée de manière amovible aux tubes de fluide (10, 11).

8. Dispositif de filtration d'air de combustion selon l'une des revendications 1 à 7, **caractérisé en ce que** la paroi filtrante de l'élément filtrant (2) en forme de tuyau est reliée à un composant par un point de fixation supplémentaire (17).

9. Dispositif de filtration d'air de combustion selon la revendication 8, **caractérisé en ce que** le point de fixation supplémentaire (17) se situe sur la pièce de support (3) de sorte que deux bosselures (18, 19) parallèles s'étendant dans le sens de l'écoulement sont formées dans l'élément filtrant (2).

10. Dispositif de filtration d'air de combustion selon l'une des revendication 1 à 9, **caractérisé en ce qu'**une bague d'étanchéité (16) est disposée entre la pièce de support (3) et au moins un des tubes de fluide (10, 11).
